# EUROPEAN PATENT SPECIFICATION

(11) **EP 3 173 269 B1**
(45) Date of publication and mention of the grant of the patent: **18.07.2018**
(21) Application number: 15196974.8
(22) Date of filing: 30.11.2015
(51) Int. Cl.: B60H 1/34

(54) **INTERNAL AIR VENT FOR A VEHICLE AND METHOD FOR ASSEMBLING AN INTERNAL AIR VENT**
INNENRAUMLÜFTER FÜR EIN FAHRZEUG UND VERFAHREN ZUR MONTAGE EINES INNENRAUMLÜFTERS
BUSE D'AÉRATION D'INTÉRIEUR POUR UN VÉHICULE ET PROCÉDÉ D'ASSEMBLAGE DE LADITE BUSE

(43) Date of publication of application: 31.05.2017
(73) Proprietor: Volvo Car Corporation, 40 531 Göteborg (SE)
(72) Inventor: Göthlin, Johan, 423 39 Torslanda (SE)
(74) Representative: Volvo Car Corporation

(56) References cited:
- DE-U1-202012 100 980
- JP-A- 2013 112 256
- JP-A- 2015 063 187
- US-A1- 2012 291 893

## Description

### Technical field

The present invention relates to an internal air vent for a vehicle, and a method for assembling such an internal air vent for a vehicle.

### Background

In automotive industry, indoor space, and especially instrument panel space is at a premium. Various knobs, control mechanisms and air vents for the indoor environment as well as entertainment system(s) and their screens need to coexist and/or share space with safety system such as air bags or the like which may require a large amount of space on the instrument panel. Further, it may be difficult to mount other types of devices on the outside of the safety system(s) due to the risk that those devices are ejected and or collide with occupants in the vehicle in the event of a crash or collision. Since the mentioned devices may be stiff, hard or even sharp this may not be acceptable. In summary, there is a need to reduce the space required for all types of knobs, control mechanisms and air vents for the indoor environment as well as entertainment system(s) and their screens.

In order to reduce the size of an air vent and their thereto related control knobs and control mechanisms, an operation knob for controlling the direction of the air from upstream fins may be mounted on a downstream fin as disclosed in US patent application 2014/0120826. Such a solution, however, leads to a large number of parts and a complex design, as well as a plurality of components which are placed in the air flow and may obstruct the air flow. An internal air vent for a vehicle is also disclosed in document US2012/0291893. Further, in general in relation to air vents as well as the automotive industry, there is a desire to improve the air flow from air vents, as well as reducing costs and assembly and/or installation time with regard to the air vent, as well as other components of the vehicle.

There is thus a need for improving the state of the art to provide an air vent which at least partly solves these problems.

### Summary of the invention

It is an object of the present invention to improve the current state of the art, to solve or alleviate at least some of the above problems, and to provide an improved internal air vent. These and other objects are achieved by an internal air vent according to the following aspects of the invention.

According to a first aspect of the present invention, an internal air vent for a vehicle is provided. The internal air vent comprises a frame defining an air outlet, the frame having a back end for connection to a ventilation system for receiving an air stream, and a front end for releasing an air stream into the vehicle, at least one back vane arranged in the frame, the at least one back vane being pivotably connected to the frame for redirecting the air stream in a first plane, two front vanes arranged in front of the at least one back vane, the two front vanes being pivotably and slidably connected to the frame, the two front vanes being pivotable to redirect the air stream from the air outlet in a second plane, the second plane being substantially perpendicular to the first plane, and wherein the two back vanes form an opening for the air stream, and a link mechanism operatively connecting the two front vanes to the at least one back vane, wherein the link mechanism is configured to transfer a sliding motion of the two front vanes in the first plane to a pivoting motion of the back vane controlling the redirection of the air stream in the first plane.

The present invention is based on the realization that control knobs, e.g. for controlling the direction of an air stream, requires yet further internal space on e.g. the instrument panel or other surfaces within a vehicle in addition to the space required by the air vents themselves, and by slidably connecting the two front vanes to the frame, and by including a link mechanism which is configured to transfer a sliding motion of the two front vanes to a pivoting motion of the at least one back vane controlling the redirection of the air stream in the first plane, the space required for the internal air vent is reduced. The internal air vent also comprises a low number of parts, as there is no need to include additional control members for the at least one back vane. The low number of parts means that the internal air vent may be made at a low cost, with fewer steps during assembly, and as such may be cheaper to manufacture and easier to install than currently used internal air vents.

The at least one back vane should be interpreted as being placed further back, as in being arranged towards the back end of the frame, whereas the two front vanes are placed in front of the at least one back vane towards the front end of the frame which front end, in use, release the air stream into the vehicle.

The redirection of the air stream should be understood as the redirection of the air stream which is released at the front end of the frame into the vehicle.

That the at least one back vane may be pivoted to redirect the air stream in a first plane means that by pivoting the at least one back vane, the direction of the air stream in the first plane is changed. The first plane may be aligned with a longitudinal axis of the internal air vent. That the two front vanes may be pivoted to redirect the air stream in a second plane, means that by pivoting the two front vanes, the direction of the air stream in the second plane is changed. The second plane may thus be perpendicular to a longitudinal axis of the internal air vent. The two front vanes may be arranged in paralell. The first and second plane are substantially perpendicular to each other, thereby the at least one back vane may control the redirection of the air stream in e.g. a vertical direction and the two front vanes may control the redirection of the air stream in e.g. a horizontal direction. Hence, a sliding motion in the first plane may be interpreted as a vertical sliding motion, or a longitudinal sliding motion within the frame.

It should be noted that the terms horizontally and vertically when referring to the direction in which the air stream is ejected by the air vent, is to be interpreted as a substantially horizontally and substantially vertically direction, respectively. Further, the term perpendicular when referring to the first and second plane is to be interpreted as substantially perpendicular. For example, a deviation of +-10% from a horizontal or vertical direction should be interpreted as being part of the term "substantially horizontally" or "substantially vertically", respectively. A deviation of +-10%, e.g. +-10 degrees, should also be interpreted as being part of the term "substantially perpendicular". Further, the terms horizontally and vertically should be interpreted as corresponding to a specific alignment of the internal air vent. The terms may be used interchangeably depending on how the internal air vent is arranged in a vehicle. Furthermore, the terms pivot, pivotably, or pivoting should be interpreted as being able to rotate or being rotatable around a rotational axis. The terms slide,slidably and sliding should be interpreted as a translational motion mainly in one direction. The sliding motion may be along or in parallel to a rotational axis of e.g. the two front vanes.

The at least one back vane being pivotably connected to the frame does not exclude the possibility of the at least one back vane being slidably connected to the frame. In at least one embodiment, the at least one back vane is unslidably connected to the frame.

That the two front vanes form an opening for the air stream should be interpreted as the two front vanes being spaced apart, and forming an opening for the air stream between the two front vanes. The opening between the two front vanes may be interpreted as an additional opening, the air stream may also be able to pass between two front vanes and the frame.

In at least one exemplary embodiment, the frame is an elongated frame. The elongated frame may have an aspect ratio in the range of 1:1.5-10.

In at least one exemplary embodiment, the two front vanes are arranged to pivot around a rotational axis, and the two front vanes are attached to the frame at two connection points, the two connections points being arranged on opposite ends of the two front vanes and movably connecting the two front vanes to the frame, and wherein the connection points are offset from the rotational axis. Hence, the two front vanes may have a common rotational axis. By offsetting the rotational axis of the two front vanes from the attachment points, the two front vanes may rotate around a rotational axis which may be placed e.g. at the front end of the frame. This may facilitate the operation of the internal air vent to an occupant of the vehicle. Further, the two front vanes may be arranged with a reduced protrusion from the frame, which reduces the likelihood of unintended manipulation of the two front vanes as well as the risk for injury in the case of an impact with the two front vanes e.g. during a collision.

In at least one exemplary embodiment, the internal air vent comprises at least two back vanes, or at least four back vanes, or at least six back vanes, wherein the back vanes are connected by the link mechanism. The link mechanism may connect the back vanes to each other on the outside of the frame. Connecting each of the back vanes via the link mechanism means that each of the back vanes may be controlled simultaneously. Further, no additional part or component may be needed to connect the link mechanism to the back vanes.

In at least one exemplary embodiment, each of the back vanes comprises a back vane shaft extending through the frame, and each of the back vane shafts comprises a lever for connecting each one of the back vanes to the link mechanism. The levers may be arranged on the outside or the inside of the frame. The lever(s) may enable the sliding motion of the two front vanes to be transferred to a motion which affects the lever(s) of the back vanes, via the link mechanism, and thus pivots the back vanes. In an alternative embodiment, each of the back vanes may comprise mounted on a back vane shaft through the frame, and each of the back vane shafts may comprise a cog or wheel connecting each one of the back vanes to the link mechanism.

In at least one exemplary embodiment, the two front vanes have a first pivot end position and a second pivot end position, the first and second pivot end positions being opposite each other, and the two front vanes are arranged to minimize the air stream around the front vane which is opposite to the first or second pivot end position when the two front vanes are set in the first or second pivot end position. A pivot end position should be interpreted as the maximum possible rotation or pivot of the two front vanes within the frame. This means that by pivoting the two front vanes to an end position to direct the air stream, the air stream around a back end of one of the two front vanes is minimized in order to maximize the amount of air which is directed in the desired direction. This may be facilitated by providing two front vanes which has a sufficient depth and a shape, e.g. of the back end of the two front vanes, which matches the inside of the frame, such that pivoting the two front vanes to a pivot end position contacts at least a portion of a back end of one of the two front vanes to the inside, e.g. inner wall, of the frame.

In at least one exemplary embodiment, the link mechanism is arranged on the outside of the frame. Arranging the link mechanism on the outside of the frame is advantageous since an obstruction to the air flow which may be caused by a link mechanism operatively connecting the two front vanes and the at least one back vane is removed from the air stream path inside the frame. Obstructions in the air stream path are detrimental to the performance of an air vent, as the amount of air, or the speed and thus directionality of the air ejected from the air vent may be reduced by obstructions. Further, having a link mechanism which is arranged on the outside of the frame means that no manipulation or connection has to occur within the frame between the two front vanes and at least one back vane during assembly. Hence, the time and cost to assemble the internal air vent may be reduced.

In an exemplary embodiment, the link mechanism may be arranged to connect the two front vanes to the at least one back vane within the frame. For example, the internal air vent may comprise at least one connection member attached to a back end of the two front vanes and attached to the at least one back vane. In an exemplary embodiment, the link mechanism may be arranged to connect the two front vanes to the at least one back vane via a through-going hole in a lateral side of the frame, and connect to the at least one back vane on the outside of the frame. For example, the internal air vent may comprise a connection member extending through a through-going hole in the lateral side of the frame. The connection member may be attached to the two front vanes and to a link mechanism to pivot the at least one back vane.

In at least one exemplary embodiment, the link mechanism comprises a U-shaped member which at least partly encompasses the frame. A U-shaped member which partly encompasses the frame is easy to insert during assembly, and the two prongs of the U-shape facilitates the transfer of the sliding motion of the two front vanes to the at least one back vane. This means that the upper part of the U-shape, connects to the two front vanes, and the bottom part connects to the at least one back vane in order to transfer a sliding motion of the two front vanes to the at least one back vane. The upper part of the U-shape may thus be arranged in proximity to a top and bottom of the frame.

In at least one exemplary embodiment, the link mechanism comprises a rectangular member which fully encompasses the frame. A rectangular member which fully encompasses the frame may reduce the amount of material, or the type of material which is needed to manufacture the link mechanism, as each side on the rectangular member is supported by two other sides.

In at least one exemplary embodiment, the link mechanism is pre-tensioned. By pre-tensioning the link mechanism, the link mechanism may be more securely connected to the two front vanes. Hence, the link mechanism may be manufactured in a resilient material. The link mechanism may be made of a plastic material or steel, or any other suitable metal.

In at least one exemplary embodiment, the internal air vent further comprises an air flow rate control member arranged to protrude in front of said two front vanes and wherein said air flow rate control member is moveable to control a flow rate of the air stream being ejected from the internal air vent. By arranging the air flow rate control member such that it protrudes in front of said two front vanes, less space is required on the instrument panel for such a control knob. The air flow rate control member may protrude through the opening for the air stream, and thus be located in front of and/or between the two front vanes. The air flow rate control member may be mounted on the two front vanes. The air flow rate control member may be connected via an air flow rate connection member to a valve inside the ventilation system for controlling the flow rate of the air stream. An advantage with the present invention is that the internal air vent may be provided as a single package which is to be mounted in the vehicle, which may require few operations to install.

In at least one exemplary embodiment, the two front vanes comprises a first shaft and a second shaft arranged on opposite ends of the two front vanes, and wherein the frame comprises a first and second shaft opening for receiving the first and second shaft, respectively. The two front vanes are thus pivotably and slidably connected to the frame via the first and second shafts which are inserted into the first and second shaft opening of the frame, respectively. By inserting the first and second shaft into the first and second shaft opening two connection points on opposite side of the two front vanes are provided. The first and second shaft opening may preferably be through-going openings or holes in order to allow the first and second shaft to reciprocate in the shaft openings.

In at least one exemplary embodiment, the first and second shaft comprises an arcuate portion as seen in a cross section perpendicular to the main axis of the respective shaft, and wherein the first and second shaft opening comprises an arcuate portion which extends further than the arcuate portion of the first and second shaft to enable the first and second shaft to be inserted and move in the first and second shaft opening. Further, the rotational axis of the two front vanes around which the two front vanes pivot, may be offset from the connection point formed by the arcuate portions of the shafts and shaft openings. The rotational axis of the two front vanes may be placed in the centre of a circle or ellipse comprising the arcuate portion. The arcuate portion of the shafts may be a portion towards the tip or end of the shafts. Alternatively, a large portion such as more than 75% or more of the shaft may have an arcuate shape.

In at least one exemplary embodiment, the frame comprises a recess having an arcuate portion for forming a bottom of the arcuate portion of the first or second shaft opening, and wherein the internal air vent further comprises a cap being adapted to be inserted into the recess, the cap having an arcuate portion for forming a top of the arcuate portion of the first or second shaft opening. Stated differently, the frame comprises a recess forming a bottom of the first or second shaft opening, and a cap is provided for forming a top of the shaft opening. The recess and cap facilitates the insertion of one of the shafts into the recess, after which the cap may be inserted to form a shaft opening. In an alternative embodiment, the frame comprises a recess for forming a bottom of the first or second shaft opening, and wherein the internal air vent further comprises a cap being adapted to be inserted into the recess, the cap being configured to form a top of the first or second shaft opening. In other words, the recess and cap may be also used with shafts having other shapes.

In at least one exemplary embodiment, the two front vanes forms one unit. This means that the two front vanes may be understood as a front vane unit comprising at least two front vanes, where the two front vanes are connected by at least one connecting portion arranged between the two front vanes. Thereby, the two front vanes are attached to each other via the connecting portion(s). The two front vanes may thus be manufactured as one unit. The first and/or second shaft may also be formed or manufactured integral to the two front vanes.

According to a second aspect of the present invention, the objectives are at least also partly met by a method for assembling an internal air vent for a vehicle. The method comprises the steps of providing a frame defining an air outlet, the frame having a back end for connection to a ventilation system for receiving an air stream, and a front end for releasing an air stream into the vehicle; arranging at least one back vane in the frame, and pivotably connecting the at least one back vane to the frame; arranging two front vanes in the frame in front of the at least one back vane, and connecting the two front vanes pivotably and slidably to the frame, the two front vanes forming an opening for the air stream; and arranging and connecting a link mechanism between the two front vanes and the at least one back vane, such that the link mechanism transfers a sliding motion of the two front vanes to a pivoting motion of the at least one back vane.

Effects and features of this second aspect of the present invention are largely analogous to those described above in connection with the first aspect of the inventive concept. Embodiments mentioned in relation to the first aspect of the present invention are largely compatible with the second aspect of the invention.

In at least one exemplary embodiment, the step of arranging two front vanes in the frame in front of the at least one back vane, and connecting the two front vanes pivotably and slidably to the frame comprises inserting a first shaft of the two front vanes through a shaft opening in the frame, arranging a second shaft of the two front vanes in a recess of the frame, and inserting a cap into the recess. The two front vanes may form one unit including the first and second shafts. The first and second shafts may be arranged on opposite sides of the two front vanes. The recess and cap thus enables and/or facilitates the insertion of the two front vanes into the frame.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Figure 1 is a schematic perspective view of an internal air vent in accordance with at least one embodiment of the invention;
Figure 2 is a schematic perspective view of an internal air vent in accordance with at least one embodiment of the invention;
Figure 3 is a cross sectional view of an internal air vent in accordance with at least one embodiment of the invention;
Figure 4 is an exploded perspective view of an internal air vent in accordance with at least one embodiment of the invention;
Figure 5a is a schematic perspective view of an internal air vent in accordance with at least one embodiment of the invention;
Figure 5b and 5c are schematic cross sectional side views of an internal air vent in accordance with at least one embodiment of the invention; and;
Figure 6a shows a cross sectional view of an internal air vent in accordance with at least one embodiment of the invention;
Figure 6b shows a cross sectional view of an internal air vent in accordance with at least one embodiment of the invention; and
Figure 7 illustrates a redirection of an air stream in a plane by pivoting a vane.

### Detailed description of preferred embodiments of the invention

In the present detailed description, embodiments of an internal air vent according to the present invention are mainly discussed with reference to views showing an internal air vent according to various embodiments of the invention. It should be noted that this by no means limits the scope of the invention, which is also applicable in other circumstances for instance with other types or variants of internal air vents, vanes, or knobs than the embodiments shown in the appended drawings. Further, that specific features are mentioned in connection to an embodiment of the invention does not mean that those components cannot be used to an advantage together with other embodiments of the invention.

The following description may use terms such as "horizontal", "vertical", "lateral", "back and forth", "up and down", "back and front", "upper", "lower", "back", "forward", "front", "rear", etc. These terms generally refer to the views and orientations as shown in the drawings and that are associated with a normal use of the invention. Hence, an internal air vent according to the present invention mounted on the dashboard of a vehicle may have a "back" end which faces in a forward direction of the vehicle, and the "front" end of such an internal air vent may be facing the inside of cabin, e.g. towards the "rear" of the vehicle. The terms are used for the sake of convenience only and shall not be limiting.

An internal air vent according to the present invention is suitable for being installed internally in a vehicle, such as a car, truck, cab on a construction machine or a similar type of vehicle. When a flow of air from the ventilation system, e.g. an air conditioning system, reaches the internal air vent the flow of air may be directed by either pivoting the front vanes, or by sliding the front vanes within the frame. The sliding motion of the front vanes is connected by a link mechanism to the back vanes of the air vent in order to pivot the back vanes. The frame defines the air outlet of the air vent. Note that there are no knobs or other types of control element placed outside and spaced apart from the frame, or on the frame of the air vent, for controlling the direction of the air. The direction of air may be solely controlled by pivoting and/or sliding the two front vanes. Optionally, the amount of air which is ejected from the air vent may be also controlled by operating an air flow rate control member positioned in front of the two front vanes.

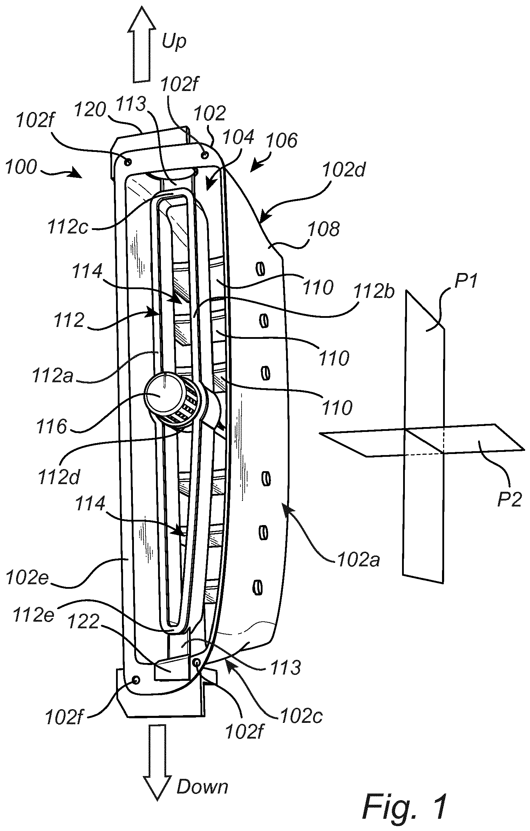

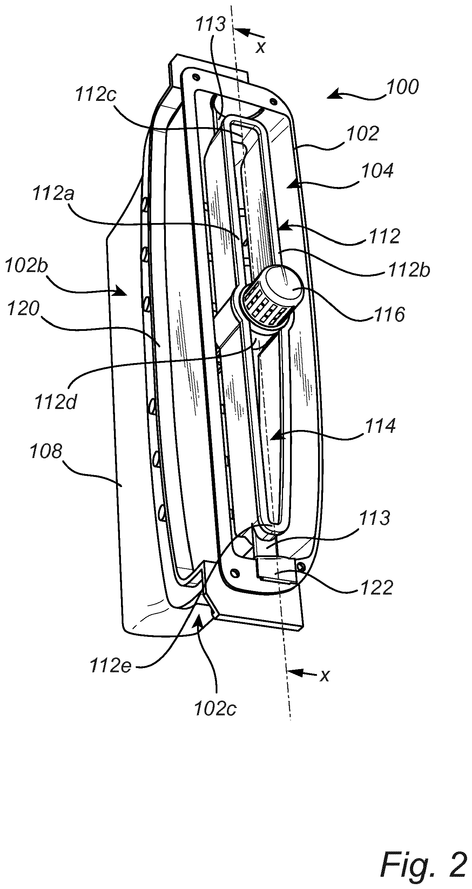

Figure 1 and 2 illustrates an internal air vent 100 for a vehicle according to a first embodiment of the present invention. The air vent 100 comprises a frame 102, six back vanes 110, two front vanes 112a, 112b, an air flow rate control member 116, and a link mechanism 120.

Figure 1 also illustrates a first plane P1 and a second plane P2. The first plane P1 is aligned along the longitudinal axis of the internal air vent 100. The second plane P2 is perpendicular to the first plane P1. In general, pivoting of the back vanes 110 controls the redirection of the air stream in the first plane P1, and pivoting the two front vanes 112a, 112, controls the redirection of the air stream in the second plane P2.

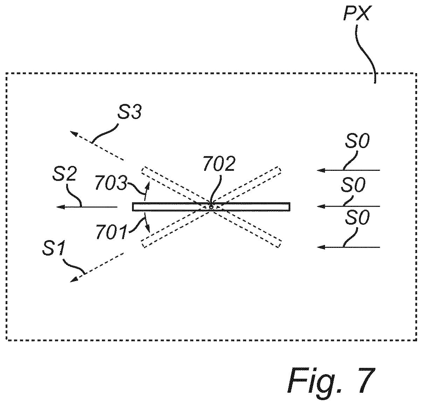

Figure 7, shows a vane 700 arranged in a plane PX. The plane PX may, for the purpose of the following description be understood as either the plane P1 or the plane P2. The vane 700 thus illustrates the principle of pivoting the back vanes 110 to redirect the air stream in the first plane P1, or pivoting the two front vanes 112a, 112b to redirect an air stream in the second plane P2. The air stream is incident from the right as shown by arrows S0. The vane 700 may rotate or pivot around an axis 702. With the vane in the position shown in figure 7, the vane 700 redirects the incident air stream S0 along the arrow S2. Pivoting the vane 700 around the axis 702, in the direction indicated by arrow 701, results in a redirection of the incident air stream S0 by the vane 700 in the direction indicated by the arrow S1. Likewise, pivoting the vane 700 around the axis 702, in the direction indicated by arrow 703, results in a redirection of the incident air stream S0 by the vane 700 in the direction indicated by the arrow S3. Hence, the expression redirecting an air stream in a plane should be understood to mean redirecting an air stream S0 incident along a direction in the plane PX, or at least the components or portions of the air stream which are in the plane PX, to another direction S1, S2, S3 within the plane PX.

Turning back to figure 1 and 2, the frame 102 has a back end 108 which is adapted to be connected to a ventilation system in a vehicle. The frame defines an air outlet 104 at the front end of the frame 102. In use, the air outlet 104 releases an air stream, which has passed through the frame 102 from the back end 108, into an interior of a vehicle. The frame has lateral sides 102a, 102b and a top 102d and bottom 102c. As shown in figure 1, the top 102d may be understood to be up and the bottom 102c down in the drawings such that the internal air vent is arranged in an upright manner. Hence, the top 102d may be arranged upwards, and the bottom 102c downwards when the internal air vent 100 is mounted in an upright position in a vehicle. The frame 102 generally has a rectangular or oval shape as seen from the front end. In other words, the frame 102 has an elongated shape, and is typically longer than it is wide. The frame 102 may have an aspect ratio in the range of 1 :1-10 or any number in between, such as 2:9 or 2:15. The lateral sides 102a, 102b may be longer than the top and bottom 102c, 102d. Note that the lateral sides 102a, 102b and the top 102d and bottom 102c of the frame may be slightly curved and/or convex.

The frame 102 also comprises a flange 102e which may encompass the frame 102 at the front end. The flange 102e may be used to support the frame 102 and the internal air vent 100 on an interior surface (not shown) of a vehicle. The flange 102e may also cover the area around the frame 102 in order to cover any gaps between the frame 102 and the interior surface of the vehicle. The flange 102e may have holes 102f for attaching the internal air vent to the indoor space in a vehicle with screws, pins, snap-locking pins, or other fastening means

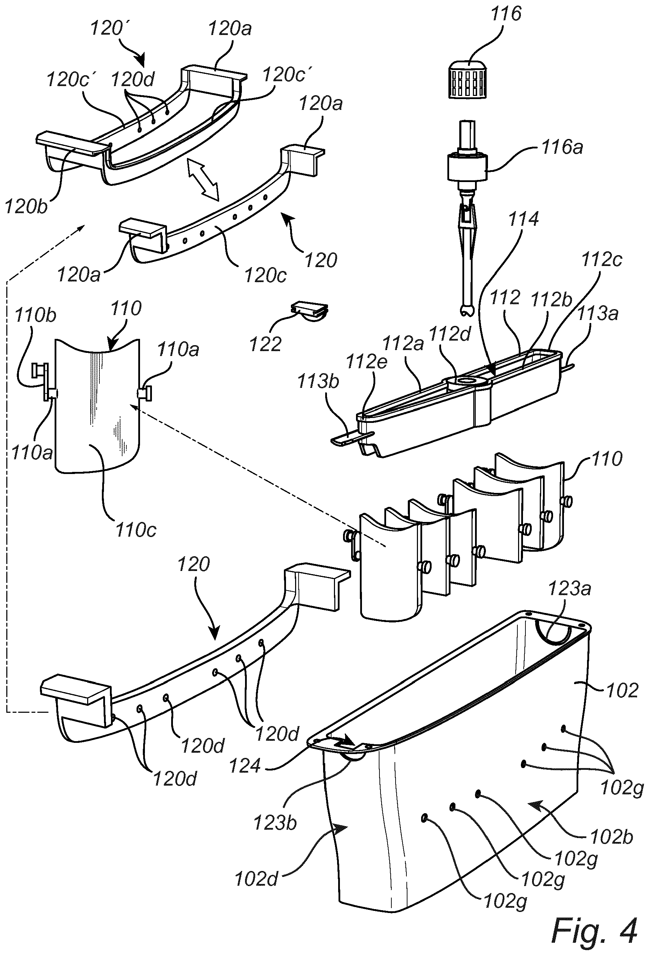

In other embodiments of the present invention (not shown), the frame 102 may be circular, square, polygonal, or in principle have any other shape. The frame 102 may be made of a plastic material. The frame 102 further comprises a cap 122 and a recess 124 which are explained in conjunction with figure 4. The length of the frame 102, e.g. the distance between the top 102d and the bottom 102c may be in the range 6 cm to 20 cm, or in the range 6 cm to 40 cm. The width of the frame, e.g. the distance between the lateral sides 102a and 102b may be in the range 2 cm to 10 cm, or in the range 2 cm to 14 cm.

The six back vanes 110 are mounted within the frame 102 towards the back end 108 of the frame. The back vanes 110 are pivotably connected and attached to the frame 102. Each of the back vanes 110 are connected and attached via back vane shafts which extend through the frame, between the lateral sides 102a, 102b. The six back vanes 110 are arranged spaced apart between the top 102d and bottom 102c of the frame 102. By pivoting the back vanes 110 an air stream flowing through the frame 102 may thus be directed in a 'vertical' direction as seen in figure 1 and 2. 'Vertical' direction means towards either the top 102d or bottom 102c. The back vanes 110 may be made of a plastic material.

The two front vanes 112a, 112b are arranged towards the front end of the frame 102 in the air outlet 104. In other words, the two front vanes 112a, 112b are arranged in front of the back vanes 110. The two front vanes 112a, 112b are shown as a front vane unit 112 comprising the two front vanes 112a, 112b. The two front vanes 112a, 112b may be connected via connecting portions 112c, 112d, 112e which attach the two front vanes 112a, 112b to each other. The front vane unit 112 also comprises a through-going opening 114 which allows an air stream to flow through the front vane unit 112. Stated differently, a through-going opening 114 is formed by the two front vanes 112a, 112 being spaced apart. The opening 114 may be, as shown in figure 1 and 2, divided into parts or portions, by the connecting portion 112d.

During operation, a first portion of an air stream being released through the air outlet 104 may pass through the opening 114 and be directed by the two front vanes 112a, 112b. A second portion of an air stream being released through the air outlet 104 may pass on the outside of the two front vanes 112a, 112b, i.e. between the two front vanes 112a, 112b and the frame 102, and be directed by the two front vanes 112a, 112b. The first portion may be in the range of 10% to 90% of the total air stream, and the second portion may be in the range of 10% to 90 %of the total air stream. It is thus understood that the total air stream is made up of the first and second portion of the air stream.

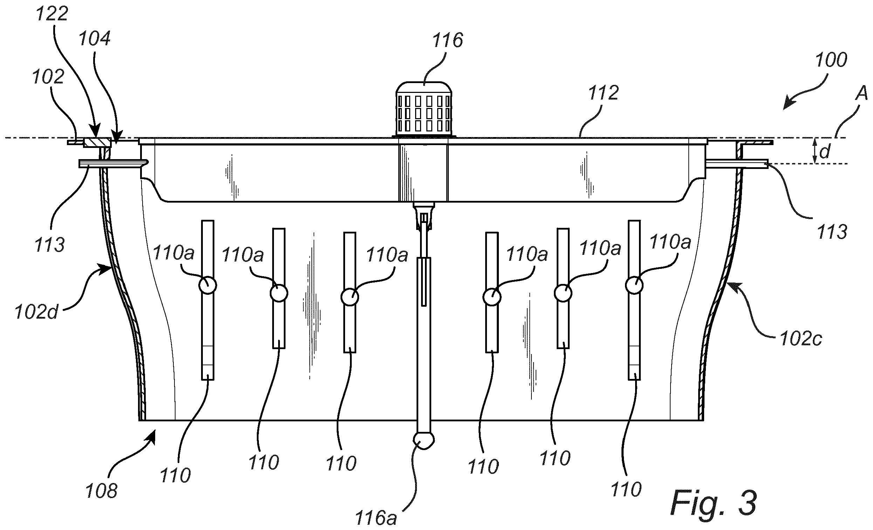

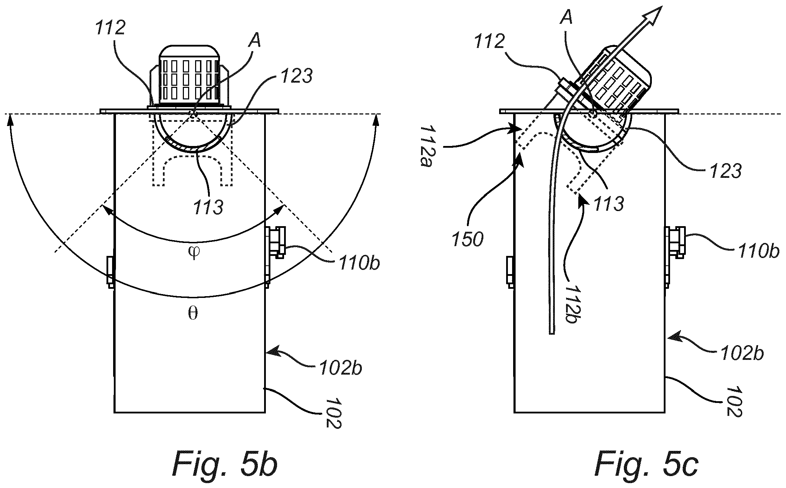

The front vane unit 112 further comprises two shafts 113, arranged at opposite sides of the front vane unit 112. The shafts 113 extend towards and through the top 102d and bottom 102c of the frame 102. The two shafts 113 connect the front vane unit 112 to the frame 102. The two shafts 113 are inserted into and through shaft openings 123 formed in the frame, see e.g. figure 4. The shafts 113 are configured to enable the front vane unit 112 to be both slidably and pivotably connected to the frame 102. Hence, the front vane unit 112 is able to both pivot around a rotational axis A, seen in figure 3 and figures 5b and 5c, and slide along or parallel to the rotational axis A. The shafts 113, and the front vane unit 112 is typically configured to enable a sliding motion in either direction from a neutral position, e.g. up and down in figure 1, in the range of 5 mm to 10 mm or more, such as a sliding motion in the range of 5 mm to 20 mm. Hence, the total length of a sliding motion for the front vane unit 112 within the frame 102 may be 10 mm to 20 mm, 10 mm to 40 mm, or more.

The two front vanes 112a, 112b, the connection portions 112c, 112d, 112e, and the shafts 113 may form one unit. Stated differently, the two front vanes 112a, 112b, the connection portions 112c, 112d, 112e, and the shafts 113 may be manufactured in one piece. The two front vanes 112a, 112b, the connection portions 112c, 112d, 112e, and the shafts 113 may be made of plastic and moulded or extruded. Alternatively, only some parts such as the two front vanes 112a, 112b and the connection portions 112c, 112d, 112e form one unit, whereas the shafts 113 are formed separately and then attached. Alternatively, the two front vanes 112a, 112b, the connection portions 112c, 112d, 112e and the shafts 113 are formed separately and then attached together to form the front vane unit 112.

The air flow rate control member 116 is arranged centrally through the front vane unit 112, e.g. throught the opening 114. The air flow rate control member 116 is arranged to protrude in front of the front vane unit 112 in order to facilitate the operation of the air flow rate control member 116. When the internal air vent 100 is mounted in a vehicle, the air flow rate control member 116 may be connected to an air valve or the like for controlling the air flow rate of the air stream which is received at the back end 108 of the frame 102. By moving, for example twisting or turning the air flow rate control member 116 an occupant inside the vehicle may control the air flow rate, e.g. the amount and/or the velocity, of the air which is released from the internal air vent 100. The air flow rate control member 116 need not be centrally arranged through the front vane unit 112 and opening 114, and can in principle be placed at any part of the front vane unit 112 and opening 114. The air flow rate control member 116 may be placed on the front vane unit 112, and the air flow rate control member 116 may be attached to the front vane unit 112.

The link mechanism 120 is arranged on the outside of the frame 102. The link mechanism 120 connects the front vane unit 112, to the back vanes 110 on the outside of the frame 102. The link mechanism 120 comprises a U-shaped member 120 which partly encompasses the frame 102. As shown in figure 2, the U-shaped member 120 encompasses a lateral side, and the top 102d and bottom 102c of the frame. The U-shaped member 120 is connected to the shafts 113 of the front vane unit 112 which extends through the top 102d and bottom 102c of the frame 102. A sliding motion, e.g. a translational movement either up or down, of the front vane unit 112 within the frame 102 thus also slides the U-shaped member 120. Stated differently, the upper part of the U-shape is connected to the two front vanes 112a, 112b, and the bottom part of the U-shape connects to the back vanes 110 in order to transfer a sliding motion of the two front vanes 112a, 112b to the back vanes 110. A sliding motion of the U-shaped member 120, may be transferred to a pivoting motion of the back vanes 110 on the outside of the frame 102. For example, the back vanes 110 may have levers as shown in e.g. figure 4 which are connected to the link mechanism 120 and thus pivots the back vanes 110 as the link mechanism slides. Alternatively, the back vanes 110 may have cogs or wheels (not shown) which are connected to the link mechanism 120. Other types or variants of connections between the link mechanism 120 and the back vanes are of course possible and within the scope of the invention. The U-shaped member may be made of plastic or steel, or any other suitable metal. The U-shaped member may be pre-tensioned such that the contact between the top of the U-shaped member and the shafts 113 of the front vane unit 112 is facilitated.

In use, the internal air vent receives an air stream at the back end 108, the air flow rate control member 116 may be used by an occupant in the vehicle to control the air flow rate and adapt the amount and/or speed of the air stream to a desired level. The front vane unit 112 may be pivoted by an occupant to direct the air stream in a 'horizontal' direction, and the front vane unit 112 may be slid in the frame, e.g. up or down, to direct the air stream in a 'vertical' direction.

Figure 3 shows a cross sectional view of the internal air vent 100 taken along the line X-X in figure 2. Note that the connection points formed by the shafts 113 which extend through the frame 102, and are offset by a distance d from a rotational axis A around which the front vane unit 112 pivots. The distance d may be in the range of 5 mm to 50 mm. The back vanes 110 comprise a back vane shaft 110a which may be centrally placed as shown in figure 3. The six back vanes 110 are arranged in two groups each having three back vanes 110. The three back vanes 110 in each group are evenly spaced apart with a distance in the range of 10 mm to 50 mm. The two groups of back vanes are typically spaced apart further than the spacing between each back vane 110 in order to enable a connection member 116a of the air flow rate control member 116 to extend between the groups of back vanes. When the internal air vent 100 is mounted in a vehicle, the connection member 116a may be further connected to some sort of air valve in a vehicle ventilation system. The back vanes 110 need not be arranged in groups, and the back vanes need not be evenly spaced apart within a back vane group or outside a back vane group.

Figure 4 shows an exploded view of an internal air vent 100. The U-shaped member 120 is illustrated in more detail, where the upper part of the U-shaped member 120 comprises a first prong 120a and a second prong 120b which, when the internal air vent 100 is assembled, directly or indirectly contact the shafts 113 of the front vane unit 112. The bottom 120c of the U-shaped member 120 also comprises a number of holes 120d for receiving the levers 110b of the back vanes. Therefore, the spacing and the number of holes 120d corresponds to the spacing and number of back vanes 110 such that a lever 110b of a back vane 110 may be inserted into a hole 120d of the U-shaped member.

An alternative link mechanism 120' is also shown, the alternative link mechanism being a rectangular member 120' which is configured to encompass the frame 120. The rectangular member 120' may be made of plastic or steel, or any other suitable metal. The rectangular member 120' may be pre-tensioned such that the contact between the top portion 120a and bottom portion 120b of the rectangular member 120' and the shafts 113 of the front vane unit 112 is facilitated. The rectangular member 120' also comprises a first and second prong 120a, 120b. The rectangular member 120' also comprises two elongated portions 120c', which connects the first and second prong 120a, 120b to each other at opposite ends of the first and second prong 120a, 120b.

Note that the frame 102 also comprises a number of holes 102g, on both of the lateral sides 102a, 102b of the frame, only one side 102b is shown for the sake of brevity. The holes 102g are arranged to receive a back vane shaft portion 110a. Hence, the spacing and the number of holes 102g corresponds to the spacing and number of back vanes 110 such that a back vane shaft 110a may be inserted into and through each of the holes 102g.

A back vane 110 is also shown in more detail in figure 4. The back vane comprises a main back vane portion 110c, which is the portion of the back vane 110 which, in use, directs the air stream. The main back vane portion 110c may thus be understood as the air stream redirecting surface of the back vane 110. The back vane 110 further comprises a back vane shaft 110a, which is shown as two shaft portions 110a arranged on either side of the back vane 110. The back vane 110 also comprises a lever 110b connected to one of the back vane shafts 110a. The length of the lever 110b may be adapted to configure the force required to pivot the back vanes 110. The length of the levers 110b may be in the range 5 mm to 30 mm. The back vanes 110 may be manufactured in one piece. The back vane 110 may be made of a plastic material. Alternatively, some parts of the back vane 110 may be manufactured or provided separately, and then attached or connected to the back vane 110. For example, the lever 110b may be attached to the back vane 110 on the outside of the frame 102, after the back vanes 110 have been arranged in the frame 102 and the back vane shafts 110a extend through the holes 102g in the lateral sides 102a, 102b of the frame 102.

In an alternative embodiment, for example utilizing the rectangular member 120', the back vanes 110 may comprise a lever 110b attached to each of the back vane shaft portions 110a on either side of the main back vane portion 110c to connect the back vanes 110 to each elongated portion 120c' of the rectangular member 120'.

The connection portion 112d of the front vane unit 112 may comprise a hole, which may be circular, such that the air flow rate control member 116 may be mounted on the front vane unit 112 and connected with the connected member 116a through the hole.

An exemplary method for assembling the internal air vent 100 may also be understood from figure 4. The method may comprise a first step of providing the frame 102 as described above. A subsequent step comprises arranging a back vane 110 in the frame 102 and pivotably connecting the back vane 110 by inserting the back vane shaft portions 110a into the holes 102g in the frame 102.

A further step comprises arranging the front vane unit 112 in the frame in front of the back vanes 110, and connecting the front vane unit 112 pivotably and slidably to the frame 102. Connecting the front vane unit 112 pivotable and slidably to the frame 102 may comprise inserting a first shaft 113a of the front vane unit 112 into a first shaft opening 123a of the frame 102, and inserting a second shaft 113b of the front vane unit 112 into a second shaft opening 123b of the frame.

It should be noted that two above steps, e.g. arranging the back vanes 110 and the front vane unit 112 may be performed one before the or even simultaneously.

The method further comprises the step of arranging and connecting a link mechanism 120 between the front vane unit 112 and the back vanes 110, such that the link mechanism transfers a sliding motion of the front vane unit 112 to a pivoting motion of the back vanes 110.

The method may further comprise an optional step of, following the step of arranging the back vanes 110 in the frame 102, connecting and/or attaching the levers 110b to the back vane shaft portion 110a on the outside of the frame 102.

The step of arranging and connecting a link mechanism 120 between the front vane unit 112 and the back vanes 110 may comprise connecting and/or inserting the levers 110b into the holes 120d for receiving the levers in the link mechanism 120.

As mentioned above, the frame may comprise a cap 122 and a recess 124. The recess 124 is part of a second shaft opening 123b of the frame 102. The recess 124 extends into the frame, and possible into the flange 102e of the frame 102. The recess 124 has an arcuate portion which forms the bottom of the shaft opening 123b. The cap 122 is adapted to be inserted into the recess 124, and has a bottom portion which is arcuate. Hence, by inserting the cap 122 into the recess 123b, an arcuate shaft opening 123b is formed.

Thus, the step of the method for assembling the internal air vent 100 which comprises arranging the front vane unit 112 in the frame in front of the back vanes 110, and connecting the front vane unit 112 pivotably and slidably to the frame 102 may comprise inserting a first shaft 113a of the front vane unit 112 through a first shaft opening 123a in the frame 102. The step further comprises arranging a second shaft 113b of the front vane unit 112 in the recess 124, and then inserting the cap 122 into the recess 124 in order to form the second shaft opening 123b and thereby securely connecting the front vane unit 112 to the frame 102. The cap 122 may be configured to snap lock to the recess 124, or may be fixated in any other known way. The skilled reader thus understands that the length of the front vane unit 112, the shafts 113, and the depth of the recess 124 may be configured such that fully inserting the first shaft 113a into the first shaft opening 123a may provide enough space to place or arrange the second shaft 113b in the recess 124.

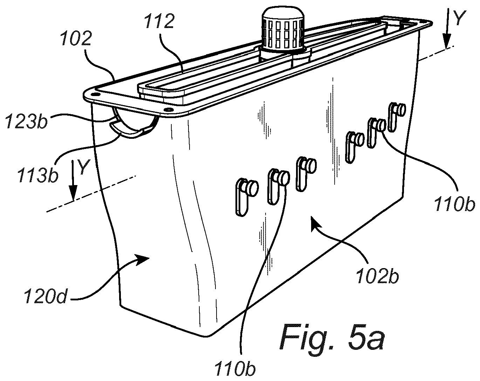

Figure 5a shows a perspective view of an internal air vent 100 without a link mechanism. Note the levers 110b being arranged on the outside of the frame 102, in particular on a lateral side 102b of the frame. Also note that the second shaft 113b extends through the second shaft opening 123b to the outside of the frame 102, and that both the second shaft 113b and the second shaft opening 123b have an arcuate shape. Both the shafts 113, e.g. the first and second shafts 113a, 113b, and both the shaft openings 123, e.g. the first and second shaft openings 123a, 123b, may have arcuate shape, only one side is shown for the sake of brevity.

Figure 5b shows a schematic cross sectional view of the internal air vent. The following description of figure 5b and 5c is valid for both the first shaft 113a, the second shaft 113b, the first shaft opening 123a and the second shaft opening 123b, therefore the first and second shafts 113, 113b are described as shaft 113 and the first and second shaft openings 113, 113b are described as shaft opening 123 for the sake of brevity.

The shaft 113 comprises an arcuate portion, as seen in the cross section on figure 5b perpendicular to the main axis, e.g. the main direction in which the shaft 113 extends. The arcuate portion of the shaft 113 has an angular extension ϕ. The angular extension ϕ may be in the range 10 degrees to 120 degrees. Typically the angular extension ϕ is approximately 45 degrees to 90 degrees. The shaft opening 123 also comprises an arcuate portion. The arcuate portion of the shaft opening 123 has an angular extension θ. The angular extension θ is in the range 45 degrees to 180 degrees. Typically the angular extension θ is approximately 150 degrees to 180 degrees. The angular extension θ is always larger than the angular extension ϕ, such that θ>ϕ. Thereby, the arcuate portions of the shaft 113 may be move in the arcuate portion of the shaft opening 123 to pivot the front vane unit 112 around the rotational axis A. The rotational axis A is thus offset from the connection point between the front vane unit 112 and the frame 102 formed by the shaft 113 and the shaft opening 123. The arcuate portions of the shaft 113 and the shaft opening 123 may preferably have the same radius of curvature to facilitate the movement. The radius of curvature for the arcutate portions of the shaft 113 and the arcuate portion of the shaft opening 123 may be centered on the rotational axis A. The radius of curvature for the arcuate portion of the shaft 113 and the arcuate portion of the shaft opening 123 may be in the range of 5mm to 50 mm.

Figure 5c illustrates another feature of the internal air vent, in particular of the front vane unit 112 and frame 102. The arrow through the front vane unit 112 illustrates at least a portion of the air flow. Based on the above description of figure 5b it is understood that the front vane unit 112 has two maximum pivotable positions around the rotational axis A, or two pivot end position which are limited by how far the shaft 113 may move, e.g. pivot, within the shaft opening 123. In figure 5c, the front vane unit 112 and the shaft 113, is set into one of the pivot end positions. The depth of the front vane unit 112, e.g. the depth of the two front vanes 112a, 112b and the shape of the back end of the two front vanes 112a, 112b may be configured such that at one, or both the pivot end positions, the air stream around the front vane 112a being opposite to the pivot end position is minimized. In other words, by pivoting the front vane unit 112 to the right as shown in figure 5c, the back end of the front vane 112a is in close proximity or even contact with the frame 102. Thereby, the directionality of the air stream is improved by reducing the leakage between the opposite front vane 112a and the frame 102. The point at which the air is minimized is indicated by arrow 150 in figure 5c, where the back end of the front vane 112a is in close proximity to or even in contact with the frame 102. The above description is also applicable for the opposite pivot end position, where back end of the other front vane 112b is in close proximity or even contact with the frame 102, and thereby minimized air stream around the front vane 112b. Minimized may herein refer to reducing the air stream around the back end of the front vane 112a, or the back end of the front vane 112b, to 10% or less than the total air stream being released through the internal air vent during use.

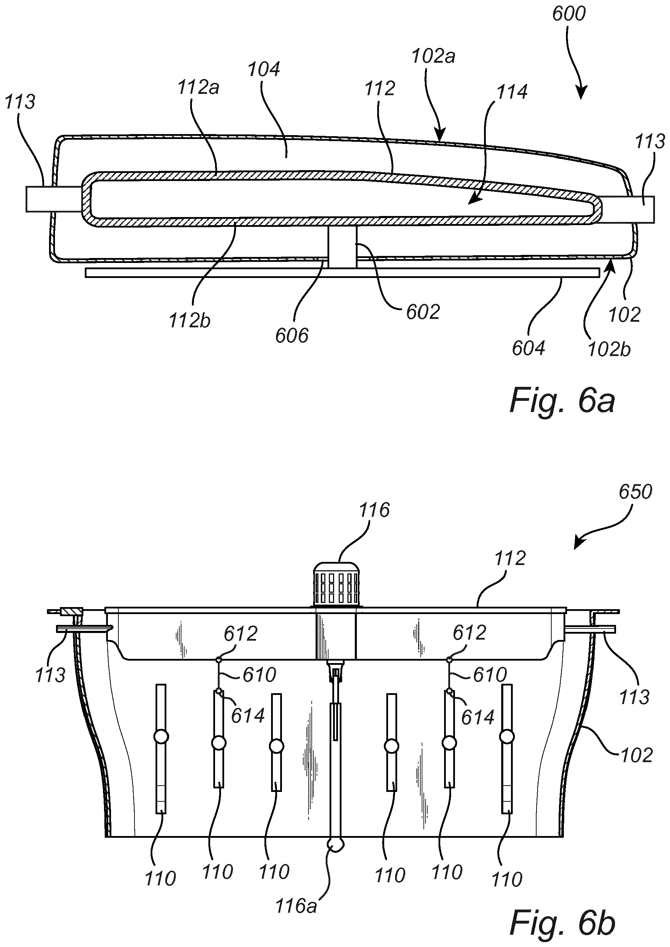

Figure 6a shows a cross section of an internal air vent 600 according to an alternative embodiment of the invention. The cross section is taken along the line Y-Y in figure 5a. All elements having the same reference signs may be the same as described above, and the internal air vent comprises the same or similar components as the internal air vents shown in figure 1-5. A difference being that the link mechanism for the internal air vent 600 is formed by a connection member 602 connecting the front vane unit 112 via an opening 606 formed in the lateral side 102b of the frame 102 to an elongated member 604 arranged on the outside of the frame 102. The elongated member 604 may comprise holes for receiving the levers 110b of the back vanes 110 as described above for reference element 120c of the link mechanism 120 in figure 4.

Figure 6b shows a cross section of an internal air vent 650 according to an alternative embodiment of the invention. All elements having the same reference signs may be the same as described above, and the internal air vent comprises the same or similar components as the internal air vents shown in figure 1-5.The cross section may be understood to be taken along the line X-X in figure 2. The difference being that the link mechanism is formed by a connection member 610 which is attached to the front vane unit 112 at a first connection point 612, and to a back vane 110 at a second connection point 614. The connection member 610 may be made of a resilient material, such that it enables the back vane to which it is connected to pivot. Alternatively, the connection member 610 may be able to elongated and retract by other means, for example the by comprising a cylinder and a rod or the like. The first and second connection points 612, 614 may be configured to allow a rotation around the connection point 612, 614 such that the connection member may rotate front the point of view seen in figure 6b. Alternatively, the and second connection points 612, 614 may be configured to allow a rotation in two dimensions for the connection member 610. The first and second connection points 612, 614 may be configured to enable the connection member to tilt, swivel or pivot. The first and second connection points 612, 614 may be a ball joint or the like.

It is of course understood that variations to the shown embodiment may be effected and still be within the scope of the invention, for example there may be fewer or more back vanes. The levers and the corresponding hole may be replaced with cogs and wheels with corresponding modifications to the link mechanism. The front vane unit and other parts of the internal air vent may be manufactured in one or more pieces. The front vane unit may comprise more than two front vanes, such as three or four front vanes. The internal air vent and components may be made of plastic, or metal, or other suitable materials. Parts of, or the complete internal air vent may be manufactured using additive manufacturing techniques.

The skilled person realizes that a number of modifications of the embodiments described herein are possible without departing from the scope of the invention, which is defined in the appended claims.

## Claims

1. An internal air vent (100, 600, 650) for a vehicle, comprising:
a frame (102) defining an air outlet (104), said frame (102) having a back end (108) for connection to a ventilation system for receiving an air stream, and a front end for releasing an air stream into the vehicle;
at least one back vane (110) arranged in the frame (102), said at least one back vane (110) being pivotably connected to the frame (102) for redirecting the air stream in a first plane (P1);
two front vanes (112; 112a, 112b) arranged in front of said at least one back vane (110), said two front vanes (112; 112a, 112b) being pivotably connected to the frame (102), said two front vanes (112; 112a, 112b) being pivotable to redirect the air stream from said air outlet (104) in a second plane (P2), said second plane being substantially perpendicular to said first plane (P1), and wherein said two front vanes (112; 112a, 112b) form an opening (114) for the air stream; and
a link mechanism (120) operatively connecting said two front vanes (112; 112a, 112b) to said at least one back vane (110), **characterized in that** said two front vanes (112; 112a, 112b) are also slidably connected to the frame (102), and said link mechanism (120) is configured to transfer a sliding motion of said two front vanes (112; 112a, 112b) in said first plane (P1) to a pivoting motion of said back vane (110) controlling the redirection of the air stream in said first plane (P1).

2. The internal air vent (100) according to claim 1, wherein said two front vanes (112; 112a, 112b) are arranged to pivot around a rotational axis (A), and are attached to said frame (102) at two connection points, said two connections points being arranged on opposite ends of said two front vanes (112; 112a, 112b) and movably connecting said two front vanes (112; 112a, 112b) to said frame (102), and wherein said connections points are offset from said rotational axis (A).

3. The internal air vent (100) according to claim 1 or 2, comprising at least two back vanes (110), or at least four back vanes (110), or at least six back vanes (110), wherein said back vanes (110) are connected by the link mechanism (120).

4. The internal air vent (100) according to any one of the preceding claims, wherein each back vane (110) comprises a back vane shaft (110a) extending through said frame (102), and wherein said back vane shaft (110a) comprises a lever (110b) for attaching each one of said back vanes (110) to said link mechanism (120).

5. The internal air vent (100) according to any one of the preceding claims, wherein said two front vanes (112; 112a, 112b) have a first pivot end position and a second pivot end position, said first and second pivot end positions being opposite each other, and said two front vanes (112; 112a, 112b) are arranged to minimize the air stream around the front vane which is opposite to the first or second pivot end position when the two front vanes are set in the first or second pivot end position.

6. The internal air vent (100) according to any one of the preceding claims, wherein the link mechanism (120) is arranged on the outside of said frame (102).

7. The internal air vent (100) according to claim 6, wherein said link mechanism (120) comprises a U-shaped member (120) which at least partly encompasses an outside of said frame (102).

8. The internal air vent (100) according to claim 6, wherein said link mechanism comprises a rectangular member (120') which fully encompasses an outside of said frame (120).

9. The internal air vent (100) according to claim 7 or 8, wherein said U-shaped member (120) or said rectangular member (120') is pre-tensioned.

10. The internal air vent (100) according to any one of the preceding claims, further comprising an air flow rate control member (116) arranged to protrude in front of said two front vanes (112; 112a, 112b) and wherein said air flow rate control member (116) is moveable to control a flow rate of the air stream being ejected from the internal air vent (100).

11. The internal air vent (100) according to claim 2, wherein said two front vanes (112; 112a, 112b) comprises a first shaft (113a) and a second shaft (113b) arranged on opposite ends of said two front vanes (112; 112a, 112b), and wherein said frame (102) comprises a first and second shaft opening (123a, 123b) for receiving said first and second shaft (113a, 113b), respectively.

12. The internal air vent (100) according to claim 11, wherein said first and second shaft (113a, 113b) comprises an arcuate portion as seen in a cross section perpendicular to the main axis of the respective shaft (113a, 113b), and wherein said first and second shaft opening (123a, 123b) comprises an arcuate portion which extends further than said arcuate portion of said first and second shaft (113a, 113b) to enable said first and second shaft (113a, 113b) to be inserted and pivoted in said first and second shaft opening (123a, 123b).

13. The internal air vent (100) according to claim 12, wherein said frame (102) comprises a recess (124) having an arcuate portion for forming a bottom of said arcuate portion of said first or second shaft opening (123), and wherein said internal air vent further comprises a cap (122) being adapted to be inserted into said recess (124), said cap (122) having an arcuate portion for forming a top of said arcuate portion of said first or second shaft opening (123).

14. The internal air vent (100) according to any one of the preceding claims, wherein said two front vanes (112; 112a, 112b) forms one unit (112).

15. A method for assembling an internal air vent (100) for a vehicle, said method comprising the steps of:
providing a frame (102) defining an air outlet (104), said frame (102) having a back end (108) for connection to a ventilation system for receiving an air stream, and a front end for releasing an air stream into the vehicle;
arranging at least one back vane (110) in the frame (102), and pivotably connecting said at least one back vane (110) to the frame (102);
arranging two front vanes (112; 112a, 112b) in the frame (102) in front of said at least one back vane (110), and connecting said two front vanes (112; 112a, 112b) pivotably and slidably to the frame, said two front vanes (112; 112a, 112b) forming an opening (114) for the air stream; and
arranging and connecting a link mechanism (120) between said two front vanes (112; 112a, 112b) and said at least one back vane (110), such that said link mechanism (120) transfers a sliding motion of said two front vanes (112; 112a, 112b) to a pivoting motion of said at least one back vane (110).

## Patentansprüche

1. Innenbelüftungsdüse (100, 600, 650) für ein Fahrzeug, aufweisend:
einen Rahmen (102), welcher einen Luftauslass (104) definiert, wobei der Rahmen (102) ein hinteres Ende (108) zum Anschluss an ein Ventilationssystem, um einen Luftstrom aufzunehmen, und ein vorderes Ende aufweist, um einen Luftstrom in das Fahrzeug freizugeben;
mindestens eine hintere Leitwand (110), welche in dem Rahmen (102) angeordnet ist, wobei die mindestens eine hintere Leitwand (110) drehbar mit dem Rahmen (102) verbunden ist, um den Luftstrom in einer ersten Ebene (P1) umzuleiten;
zwei vordere Leitwände (112; 112a, 112b), welche vor der mindestens einen hinteren Leitwand (110) angeordnet sind, wobei die beiden vorderen Leitwände (112; 112a, 112b) drehbar mit dem Rahmen (102) verbunden sind, wobei die beiden vorderen Leitwände (112; 112a, 112b) drehbar sind, um den Luftstrom aus dem Luftauslass (104) in einer zweiten Ebene (P2) umzuleiten, wobei die zweite Ebene im Wesentlichen senkrecht zu der ersten Ebene (P1) ist und wobei die beiden vorderen Leitwände (112; 112a, 112b) eine Öffnung (114) für den Luftstrom bilden; und
einen Verbindungsmechanismus (120), welcher die beiden vorderen Leitwände (112; 112a, 112b) mit der mindestens einen hinteren Leitwand (110) wirksam verbindet,
**dadurch gekennzeichnet, dass** die beiden vorderen Leitwände (112; 112a, 112b) auch verschiebbar mit dem Rahmen (102) verbunden sind, und der Verbindungsmechanismus (120) dafür ausgelegt ist, eine gleitende Bewegung der beiden vorderen Leitwände (112; 112a, 112b) in der ersten Ebene (P1) in eine Drehbewegung der hinteren Leitwand (110) zu übertragen, so dass das Umleiten des Luftstroms in der ersten Ebene (P1) gesteuert wird.

2. Innenbelüftungsdüse (100) nach Anspruch 1, wobei die beiden vorderen Leitwände (112; 112a, 112b) eingerichtet sind, um um eine Drehachse (A) herum zu drehen, und an dem Rahmen (102) an zwei Verbindungspunkten angebracht sind, wobei die beiden Verbindungspunkte an gegenüber liegenden Enden der beiden vorderen Leitwände (112; 112a, 112b) angeordnet sind und die beiden vorderen Leitwände (112; 112a, 112b) beweglich mit dem Rahmen (102) verbinden, und wobei die Verbindungspunkte von der Drehachse (A) versetzt sind.

3. Innenbelüftungsdüse (100) nach Anspruch 1 oder 2, aufweisend mindestens zwei hintere Leitwände (110) oder mindestens vier hintere Leitwände (110) oder mindestens sechs hintere Leitwände (110), wobei die hinteren Leitwände (110) durch den Verbindungsmechanismus (120) verbunden sind.

4. Innenbelüftungsdüse (100) nach einem der vorhergehenden Ansprüche, wobei jede hintere Leitwand (110) einen hinteren Leitwandschaft (110a) aufweist, welcher sich durch den Rahmen (102) erstreckt, und wobei der hintere Leitwandschaft (110a) einen Hebel (110b) aufweist, um jede Leitwand (110) an dem Verbindungsmechanismus (120) zu befestigen.

5. Innenbelüftungsdüse (100) nach einem der vorhergehenden Ansprüche, wobei die beiden vorderen Leitwände (112; 112a, 112b) eine erste Drehendposition und eine zweite Drehendposition aufweisen, wobei die erste und zweite Drehendposition einander gegenüber liegen und die beiden vorderen Leitwände (112; 112a, 112b) eingerichtet sind, um den Luftstrom um die vordere Leitwand herum, welche gegenüber der ersten oder zweiten Drehendposition liegt, zu minimieren, wenn die beiden vorderen Leitwände in die erste oder zweite Drehendposition gebracht sind.

6. Innenbelüftungsdüse (100) nach einem der vorhergehenden Ansprüche, wobei der Verbindungsmechanismus (120) an der Außenseite des Rahmens (102) angeordnet ist.

7. Innenbelüftungsdüse (100) nach Anspruch 6, wobei der Verbindungsmechanismus (120) ein U-förmiges Element (120) aufweist, welches zumindest teilweise eine Außenseite des Rahmens (102) umgreift.

8. Innenbelüftungsdüse (100) nach Anspruch 6, wobei der Verbindungsmechanismus ein rechteckiges Element (120') aufweist, welches eine Außenseite des Rahmens (120) vollständig umgreift.

9. Innenbelüftungsdüse (100) nach Anspruch 7 oder 8, wobei das U-förmige Element (120) oder das rechteckige Element (120') vorgespannt ist.

10. Innenbelüftungsdüse (100) nach einem der vorhergehenden Ansprüche, ferner aufweisend ein Element (116) zur Steuerung der Luftstromrate, welches eingerichtet ist, um vor den beiden vorderen Leitwänden (112; 112a, 112b) vorzuspringen, und wobei das Element (116) zur Steuerung der Luftstromrate beweglich ist, um eine Stromrate des Luftstroms, welcher aus der Innenbelüftungsdüse (100) ausgestoßen wird, zu steuern.

11. Innenbelüftungsdüse (100) nach Anspruch 2, wobei die beiden vorderen Leitwände (112; 112a, 112b) einen ersten Schaft (113a) und einen zweiten Schaft (113b) aufweisen, welche an gegenüber liegenden Enden der beiden vorderen Leitwände (112; 112a, 112b) angeordnet sind, und wobei der Rahmen (102) eine erste und zweite Öffnung (123a, 123b) zur Aufnahme des ersten und zweiten Schafts (113a, 113b) jeweils aufweist.

12. Innenbelüftungsdüse (100) nach Anspruch 11, wobei der erste und zweite Schaft (113a, 113b) einen bogenförmigen Abschnitt aufweisen, wenn sie in einem Querschnitt senkrecht zu der Hauptachse des jeweiligen Schafts (113a, 113b) gesehen werden, und wobei die erste und zweite Schaftöffnung (123a, 123b) einen bogenförmigen Abschnitt aufweisen, welcher sich weiter erstreckt als der bogenförmige Abschnitt des ersten und zweiten Schafts (113a, 113b), um es dem ersten und zweiten Schaft (113a, 113b) zu ermöglichen, in die erste und zweite Schaftöffnung (123a, 123b) eingesetzt und gedreht zu werden.

13. Innenbelüftungsdüse (100) nach Anspruch 12, wobei der Rahmen (102) eine Aussparung (124) mit einem bogenförmigen Abschnitt aufweist, um einen Boden des bogenförmigen Abschnitts der ersten oder zweiten Schaftöffnung (123) zu bilden, und wobei die Innenbelüftungsdüse ferner eine Kappe (122) aufweist, welche angepasst ist, in die Aussparung (124) eingesetzt zu werden, wobei die Kappe (122) einen bogenförmigen Abschnitt zum Bilden eines Oberteils des bogenförmigen Abschnitts der ersten oder zweiten Schaftöffnung (123) aufweist.

14. Innenbelüftungsdüse (100) nach einem der vorhergehenden Ansprüche, wobei die beiden vorderen Leitwände (112; 112a, 112b) eine Einheit (112) bilden.

15. Verfahren zum Zusammenbau einer Innenbelüftungsdüse (100) für ein Fahrzeug, wobei das Verfahren die Schritte aufweist:
Bereitstellen eines Rahmens (102), welcher einen Luftauslass (104) definiert, wobei der Rahmen (102) ein hinteres Ende (108) zum Anschluss an ein Ventilationssystem, um einen Luftstrom aufzunehmen, und ein vorderes Ende aufweist, um einen Luftstrom in das Fahrzeug freizugeben;
Anordnen von mindestens einer hinteren Leitwand (110) in dem Rahmen (102) und drehbar Verbinden der hinteren Leitwand (110) mit dem Rahmen (102);
Anordnen von zwei vorderen Leitwänden (112; 112a, 112b) in dem Rahmen (102) vor der mindestens einen Leitwand (110) und Verbinden der beiden vorderen Leitwände (112; 112a, 112b) drehbar und verschiebbar mit dem Rahmen, wobei die beiden vorderen Leitwände (112; 112a, 112b) eine Öffnung (114) für den Luftstrom bilden; und
Anordnen und Verbinden eines Verbindungsmechanismus (120) zwischen den beiden vorderen Leitwänden (112; 112a, 112b) und der mindestens einen hinteren Leitwand (110), so dass der Verbindungsmechanismus (120) eine gleitende Bewegung der beiden vorderen Leitwände (112; 112a, 112b) in eine Drehbewegung der mindestens einen hinteren Leitwand (110) überträgt.

## Revendications

1. Event d'air interne (100, 600, 650) pour un véhicule, comprenant :
un cadre (102) définissant une sortie d'air (104), ledit cadre (102) ayant une extrémité arrière (108) destinée à être connectée à un système de ventilation pour recevoir un flux d'air, et une extrémité avant pour libérer un flux d'air dans le véhicule ;
au moins une ailette arrière (110) disposée dans le cadre (102), ladite au moins une ailette arrière (110) étant connectée de manière pivotante au cadre (102) de manière à rediriger le flux d'air dans un premier plan (P1) ;
deux ailettes avant (112 ; 112a, 112b) disposées devant ladite au moins une ailette arrière (110), lesdites deux ailettes avant (112 ; 112a, 112b) étant connectées de manière pivotante au cadre (102), lesdites deux ailettes avant (112 ; 112a, 112b) pouvant pivoter pour rediriger le flux d'air depuis ladite sortie d'air (104) dans un deuxième plan (P2), ledit deuxième plan étant sensiblement perpendiculaire audit premier plan (P1) et lesdites deux ailettes avant (112 ; 112a, 112b) formant une ouverture (114) pour le flux d'air ; et
un mécanisme de liaison (120) reliant fonctionnellement lesdites deux ailettes avant (112 ; 112a, 112b) à ladite au moins une ailette arrière (110), **caractérisé en ce que** lesdites deux ailettes avant (112 ; 112a, 112b) sont également connectées de manière coulissante au cadre (102), et ledit mécanisme de liaison (120) est configuré pour transférer un mouvement de glissement desdites deux ailettes avant (112 ; 112a, 112b) dans ledit premier plan (P1) à un mouvement de pivotement de ladite ailette arrière (110) commandant la redirection du flux d'air dans ledit premier plan (P1).

2. Event d'air interne (100) selon la revendication 1, dans lequel lesdites deux ailettes avant (112 ; 112a, 112b) sont disposées de manière à pivoter autour d'un axe de rotation (A), et sont attachées audit cadre (102) au niveau de deux points de connexion, lesdits deux points de connexion étant disposés sur des extrémités opposées desdites deux ailettes avant (112 ; 112a, 112b) et reliant de manière mobile lesdites deux ailettes avant (112 ; 112a, 112b) audit cadre (102), et lesdits points de connexion étant décalés dudit axe de rotation (A) .

3. Event d'air interne (100) selon la revendication 1 ou 2, comprenant au moins deux ailettes arrière (110), ou au moins quatre ailettes arrière (110), ou au moins six ailettes arrière (110), lesdites ailettes arrière (110) étant connectées par le mécanisme de liaison (120).

4. Event d'air interne (100) selon l'une quelconque des revendications précédentes, dans lequel chaque ailette arrière (110) comprend un arbre d'ailette arrière (110a) s'étendant à travers ledit cadre (102), et dans lequel ledit arbre d'ailette arrière (110a) comprend un levier (110b) pour attacher chacune desdites ailettes arrière (110) audit mécanisme de liaison (120).

5. Event d'air interne (100) selon l'une quelconque des revendications précédentes, dans lequel lesdites deux ailettes avant (112 ; 112a, 112b) présentent une première position d'extrémité de pivotement et une deuxième position d'extrémité de pivotement, lesdites première et deuxième positions d'extrémité de pivotement étant opposées l'une à l'autre, et lesdites deux ailettes avant (112 ; 112a, 112b) sont disposées de manière à minimiser le flux d'air autour de l'ailette avant, qui est opposé à la première ou à la deuxième position d'extrémité de pivotement lorsque les deux ailettes avant sont placées dans la première ou dans la deuxième position d'extrémité de pivotement.

6. Event d'air interne (100) selon l'une quelconque des revendications précédentes, dans lequel le mécanisme de liaison (120) est disposé sur l'extérieur dudit cadre (102).

7. Event d'air interne (100) selon la revendication 6, dans lequel ledit mécanisme de liaison (120) comprend un organe en forme de U (120) qui entoure au moins en partie l'extérieur dudit cadre (102).

8. Event d'air interne (100) selon la revendication 6, dans lequel ledit mécanisme de liaison comprend un organe rectangulaire (120') qui entoure complètement l'extérieur dudit cadre (120).

9. Event d'air interne (100) selon la revendication 7 ou 8, dans lequel ledit organe en forme de U (120) ou ledit organe rectangulaire (120') est précontraint.

10. Event d'air interne (100) selon l'une quelconque des revendications précédentes, comprenant en outre un organe de contrôle du débit d'air (116) prévu pour faire saillie devant lesdites deux ailettes avant (112 ; 112a, 112b) et dans lequel ledit organe de contrôle du débit d'air (116) peut être déplacé pour contrôler un débit du flux d'air éjecté depuis l'évent d'air interne (100).

11. Event d'air interne (100) selon la revendication 2, dans lequel lesdites deux ailettes avant (112 ; 112a, 112b) comprennent un premier arbre (113a) et un deuxième arbre (113b) disposés sur des extrémités opposées desdites deux ailettes avant (112 ; 112a, 112b), et dans lequel ledit cadre (102) comprend une première et une deuxième ouverture d'arbre (123a, 123b) pour recevoir lesdits premier et deuxième arbres (113a, 113b), respectivement.

12. Event d'air interne (100) selon la revendication 11, dans lequel lesdits premier et deuxième arbres (113a, 113b) comprennent une portion arquée, vue en section transversale perpendiculairement à l'axe principal de l'arbre respectif (113a, 113b), et dans lequel lesdites première et deuxième ouvertures d'arbre (123a, 123b) comprennent une portion arquée qui s'étend plus loin que ladite portion arquée desdits premier et deuxième arbres (113a, 113b) afin de permettre auxdits premier et deuxième arbres (113a, 113b) d'être insérés et pivotés dans lesdites première et deuxième ouvertures d'arbre (123a, 123b).

13. Event d'air interne (100) selon la revendication 12, dans lequel ledit cadre (102) comprend un renfoncement (124) ayant une portion arquée pour former un fond de ladite portion arquée de ladite première ou deuxième ouverture d'arbre (123), et dans lequel ledit évent d'air interne comprend en outre un capuchon (122) prévu pour être inséré dans ledit renfoncement (124), ledit capuchon (122) ayant une portion arquée pour former une partie supérieure de ladite portion arquée desdites première ou deuxième ouvertures d'arbre (123) .

14. Event d'air interne (100) selon l'une quelconque des revendications précédentes, dans lequel lesdites deux ailettes avant (112 ; 112a, 112b) forment une unité (112).

15. Procédé pour assembler un évent d'air interne (100) pour un véhicule, ledit procédé comprenant les étapes consistant à :
fournir un cadre (102) définissant une sortie d'air (104), ledit cadre (102) ayant une extrémité arrière (108) destinée à être connectée à un système de ventilation pour recevoir un flux d'air, et une extrémité avant pour libérer un flux d'air dans le véhicule ;
agencer au moins une ailette arrière (110) dans le cadre (102), et
connecter de manière pivotante ladite au moins une ailette arrière (110) au cadre (102) ;
agencer deux ailettes avant (112 ; 112a, 112b) dans le cadre (102) en avant de ladite au moins une ailette arrière (110), et connecter lesdites deux ailettes avant (112 ; 112a, 112b) de manière pivotante et coulissante au cadre, lesdites deux ailettes avant (112 ; 112a, 112b) formant une ouverture (114) pour le flux d'air ; et
agencer et connecter un mécanisme de liaison (120) entre lesdites deux ailettes avant (112 ; 112a, 112b) et ladite au moins une ailette arrière (110), de telle sorte que ledit mécanisme de liaison (120) transfère un mouvement de coulissement desdites deux ailettes avant (112 ; 112a, 112b) à un mouvement de pivotement de ladite au moins une ailette arrière (110).
